# FASCICULE DE BREVET EUROPEEN

(11) **EP 2 750 882 B1**
(45) Date de publication et mention de la délivrance du brevet: **30.05.2018**
(21) Numéro de dépôt: 12762018.5
(22) Date de dépôt: 30.08.2012
(51) Int. Cl.: B32B 15/01, C22C 21/02, C22C 21/06, C22F 1/05

(54) **TÔLE PLAQUÉE POUR CARROSSERIE AUTOMOBILE**
BREITSCHLITZVERBUNDFOLIE AUS ALUMINUM FÜR KAROSSERIEWERKSTATT
COMPOSITE ALUMINIUM SHEET FOR AUTOMOTIVE BODY SHOP

(30) Priorité: 02.09.2011 FR 1102673
(43) Date de publication de la demande: 09.07.2014
(73) Titulaire: Constellium Neuf Brisach, 68600 Biesheim (FR)
(72) Inventeur: MULLER, Estelle, F-38000 Grenoble (FR); HENRY, Sylvain, F-38430 Saint Jean de Moirans (FR); GUIGLIONDA, Gilles, F-38170 Seyssinet-Pariset (FR)
(74) Mandataire: Constellium - Propriété Industrielle
(86) Numéro de dépôt international: PCT/FR2012/000344
(87) Numéro de publication internationale: WO 2013/030469

(56) Documents cités:
- EP-A1- 1 852 250
- EP-A1- 2 110 235
- EP-A1- 2 156 945
- FR-A1- 2 922 222
- US-A1- 2010 279 143

## Description

### Domaine de l'invention

L'invention concerne le domaine des tôles en alliage Al-Si-Mg, plus particulièrement en alliages de la série AA6xxx selon la désignation de l' « Aluminum Association », destinées à la fabrication, notamment par emboutissage et/ou sertissage, de composants de carrosserie automobile, tels que notamment des ailes, des portes, des hayons, des capots, des toits ou autres pièces de structure de caisse.
Plus précisément, l'invention concerne un matériau composite pour composants de carrosserie automobile, composé de tôles en alliage d'aluminium, dans lequel une tôle de placage est appliquée sur au moins un côté d'une tôle d'âme, toutes deux ayant une composition optimisée pour l'utilisation du matériau plaqué comme composant de carrosserie automobile.
L'invention concerne également le procédé de fabrication dudit matériau composite de tôles par co-laminage.

### Etat de la technique

L'aluminium est utilisé de manière croissante dans la construction automobile pour réduire le poids des véhicules et ainsi réduire la consommation de carburant et les rejets de polluants et de gaz à effets de serre.
Les tôles sont utilisées notamment pour la fabrication de pièces de peau de carrosserie, en particulier les ouvrants, dont les portières, capots et hayons, mais aussi les toits ou pavillons ainsi que les composants de structure de caisse encore appelée « Caisse en blanc ».
Ce type d'application requiert un ensemble de propriétés, parfois antagonistes telles que :
- une formabilité élevée pour les opérations d'emboutissage et/ou de sertissage,
- une résistance mécanique élevée après cuisson des peintures pour obtenir une bonne résistance générale et à l'indentation tout en minimisant le poids de la pièce,
- une limite d'élasticité contrôlée à l'état de livraison de la tôle pour maîtriser le retour élastique lors de la mise en forme,
- une stabilité des propriétés de formabilité et en particulier de la sertissabilité du matériau à l'état de livraison lors d'une attente prolongée avant la mise en forme,
- une bonne capacité à l'absorption d'énergie en cas de choc pour application à des pièces de structure de caisse,
- une bonne qualité de surface après mise en forme et peinture, et notamment l'absence de bandes de lüders et l'absence ou la présence très minime de ce que l'homme du métier connaît sous l'appellation de lignage, rugosités alignées créées lors de la mise en forme,
- un bon comportement dans les divers procédés d'assemblage utilisés en carrosserie automobile tels que le soudage par points, le soudage laser, le soudage FSW, le collage, le clinchage ou le rivetage,
- une bonne résistance à la corrosion, notamment la corrosion filiforme, de la pièce peinte,
- une compatibilité avec les exigences du recyclage des déchets de fabrication ou des véhicules recyclés,
- un coût acceptable pour une production en grande série.

Tous les alliages d'aluminium dont il est question dans ce qui suit sont désignés, sauf mention contraire, selon les désignations définies par l' « Aluminum Association » dans les « Registration Record Series » qu'elle publie régulièrement.

Les exigences pré-citées ont conduit au choix des alliages Al-Mg-Si, c'est-à-dire les alliages de la série AA6xxx.
En Europe, les alliages AA6016 et AA6016A, à des épaisseurs de l'ordre de 1 à 2.5 mm, sont les plus utilisés pour cette application, car ils conduisent à un meilleur compromis entre les diverses propriétés requises, en assurant notamment une meilleure aptitude au sertissage, et une meilleure résistance à la corrosion filiforme, que les alliages à teneur en cuivre plus élevée tels que l'alliage AA6111 largement utilisé aux Etats-Unis.
Des alliages du type AA6016 sont décrits notamment dans les brevets FR 2360684 d' « Alusuisse » et EP 0259232 de « Cegedur Pechiney », tandis que des alliages du type AA6111 sont décrits dans le brevet US 4,614,552 d'« Alcan International Ltd.»

Cependant, la résistance mécanique de l'alliage AA6016 après cuisson des peintures reste nettement inférieure à celle du AA6111, et ce d'autant plus que la température de cuisson tend à décroître, de sorte que le durcissement au revenu est moins efficace.
Pour cette raison, et pour permettre des allégements plus conséquents, les constructeurs d'automobiles sont demandeurs d'une résistance mécanique plus élevée après peinture.
Dans ce but, la société « Pechiney » a développé de nouvelles variantes de l'alliage AA6016, en particulier une variante « DR120 » conduisant à une limite d'élasticité après trempe, pré-déformation en traction de 2 %, et cuisson de peinture, typiquement durant 20 min. à 185°c, de l'ordre de 240 MPa. Ces développements ont fait l'objet de publications, notamment des articles de R. Shahani et al. « Optimised 6xxx aluminium alloy sheet for autobody outer panels » Automotive Alloys 1999, Proceedings of the TMS Annual Meeting Symposium, 2000, pp. 193-203, et de D. Daniel et al. « Development of 6xxx Alloy Aluminum Sheet for Autobody Outer Panels : Bake Hardening, Formability and Trimming Performance » IBEC'99 - International Body Engineering Conference, Detroit, 1999, SAE Technical Paper N° 1999-01-3195.
Parallèlement, Alcan a proposé une nouvelle variante de l'alliage AA6111, dénommée 6111-T4P, conduisant à une limite d'élasticité, après cuisson de peinture, améliorée (typiquement 270 à 280 MPa) sans réduction de la formabilité à l'état T4. Ce produit a été décrit notamment dans l'article de A. K. Gupta et al. « The Properties and Characteristics of Two New Aluminum Automotive Closure Panel Materials », SAE Technical Paper 960164, 1996.
Enfin, « Pechiney » a proposé dans sa demande EP1633900 un alliage pour pavillon de toit, particulièrement dur, du type AA6056 dont la mise en forme est de ce fait impérativement effectuée à l'état T4, mais l'aptitude au sertissage demeure évidemment limitée.
Ces nouveaux développements incluent pour la plupart un traitement thermique optimisé de type pré-revenu, effectué après la trempe, pour améliorer le durcissement à la cuisson des peintures. En effet, en l'absence d'un tel traitement, la cinétique de durcissement à la cuisson diminue avec le temps d'attente à température ambiante entre la trempe et la cuisson, et une attente de plusieurs semaines est pratiquement inévitable en production industrielle. Ce phénomène est connu depuis longtemps, et a été décrit par exemple dans l'article de M. Renouard et R. Meillat : « Le pré-revenu des alliages aluminium-magnésium-silicium », Mémoires Scientifiques de la Revue de Métallurgie, décembre 1960, pp. 930-942. Le traitement de pré-revenu fait l'objet du brevet EP 0949344 d'« Alcan International Ltd. »

Compte tenu du développement croissant de l'utilisation des tôles en alliage d'aluminium pour les composants de carrosserie automobile et des productions de grande série, il existe toujours une demande de nuances encore améliorées permettant de réduire les épaisseurs sans altérer les autres propriétés de façon à toujours accroître l'allègement.
Bien évidemment, cette évolution passe par l'utilisation d'alliages à limite d'élasticité de plus en plus élevée, et la solution décrite plus haut, consistant à utiliser des alliages de la série AA6xxx de plus en plus résistants, mis en forme à l'état T4, c'est à dire après mise en solution et trempe, et durcissant fortement lors des opérations de pré-revenu et cuisson des peintures et vernis, atteint ses limites. Elle débouche sur des alliages de plus en plus durs dès l'état T4 et qui, de ce fait, posent de sérieux problèmes de mise en forme, notamment lors d'opérations sévères comme le sertissage d'un panneau extérieur sur une pièce de doublure ou encore l'emboutissage profond.

Pour résoudre ces difficultés, des solutions palliatives consistant à modifier la géométrie des pièces ou à « dégrader » le procédé de mise en forme et donc les caractéristiques de forme de la pièce ainsi obtenue ont d'abord été utilisées pour s'accommoder de ces alliages peu formables.

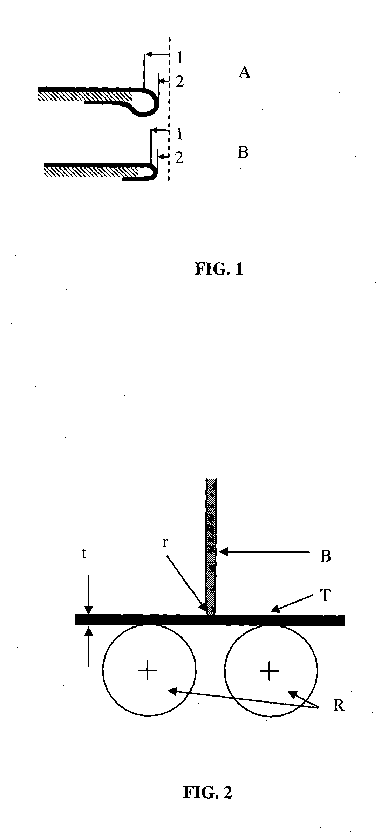

Par exemple, on peut utiliser un procédé de sertissage dit « en goutte d'eau » A au lieu d'un sertissage habituel dit « à plat » B, dans le cas d'un tel alliage à faible aptitude au sertissage, mais avec l'effet négatif d'une augmentation du jeu apparent 1 entre le bord serti et les autres éléments de la carrosserie pour un même jeu réel 2 comme indiqué en figure 1.
Dans le cas d'un alliage à faible aptitude à l'emboutissage, on peut apporter des modifications de formes ou réduire les efforts de retenue, en utilisant des joncs et des rayons d'outillage très émoussés. Ainsi, on peut certes parvenir à emboutir plus facilement la pièce, mais il est alors particulièrement délicat de maîtriser sa géométrie, et le champ des formes possibles s'en trouve réduit.

Dans un cas comme dans l'autre, ces solutions imposent d'importantes concessions sur la géométrie de la pièce, et le besoin d'améliorer la formabilité des tôles à hautes caractéristiques mécaniques demeure particulièrement aigu.

D'autres solutions plus axées sur le matériau lui-même ont également vu le jour pour améliorer les compromis habituels de propriétés d'une matière comme par exemple le compromis entre résistance mécanique élevée et bonne formabilité. Là où un seul matériau ne permettait pas d'améliorer ce compromis, l'utilisation d'un matériau composite constitué d'un sandwich de tôles co-laminées a permis, en combinant les propriétés différentes des tôles constituant le composite, d'obtenir simultanément une amélioration de deux ou plusieurs propriétés habituellement considérées comme ' antagonistes.

Des matériaux composites constitués de tôles co-laminées sont ainsi connus dans le domaine des tôles de brasage pour échangeurs thermiques associant généralement une âme en alliage d'aluminium de la série AA3xxx et une tôle de placage ou peau en alliage de la série AA4xxx.
Certaines applications aéronautiques associent par ailleurs des tôles d'âme en alliage d'aluminium de la série AA2xxx à des tôles de placage en alliage de la série 1xxx.
Dans ces deux cas d'applications, il s'agit de répondre à des exigences particulières d'aptitude au brasage, liées à l'échange thermique, la corrosion ou la corrosion-érosion ainsi que la résistance mécanique, mais sans aucun point commun avec le problème résolu par la présente invention.

Des applications sont également connues dans le domaine de la carrosserie automobile.
Certaines visent à associer une âme conférant les caractéristiques mécaniques à une tôle de placage conférant un aspect esthétique ou une bonne résistance à la corrosion ou encore une bonne résistance à la rayure ou au grippage lors de la mise en forme.
Ainsi les demandes JP 55113856 et JP 55113857 de « Sumitomo » associent des alliages d'âme respectivement de la série AA7xxx et de la série AA 2xxx à des placages en alliage de la série AA5xxx pour fabriquer des pare-chocs alliant propriétés mécaniques élevées, bonne résistance à la corrosion et brillance.
Les demandes JP 5318147 et JP 5339669 de « Sky Aluminium » combinent une âme en alliage de la série 5xxx et un placage en alliage de la série 4xxx ou 6xxx permettant un durcissement par précipitation en surface pour améliorer la résistance à la rayure ou au grippage lors de la mise en forme.
Dans le même esprit, et en vue de conférer à la surface une résistance à la corrosion améliorée, la demande FR 2877877 de « Corus Aluminium » décrit l'association d'alliages d'âme des séries 5xxx ou 6xxx et d'alliages de placage des séries 1xxx, 3xxx ou 7xxx à faible teneur en zinc.
Enfin les demandes JP 62158032 et JP 62158033 de « Kobe Steel » portent, quant à elles, sur des tôles plaquées de carrosserie automobile à bonne aptitude au pliage constituées d'une tôle d'âme en alliage de la série AA5xxx et d'un placage en alliage à 99 % ou plus d'aluminium. Une telle solution présente toutefois l'inconvénient d'une résistance limitée, d'un point de vue général du fait de l'utilisation d'alliages de la série 5xxx, qui plus est sans durcissement lors de la cuisson des peintures, mais plus encore en termes de résistance à l'indentation du fait de l'utilisation d'un alliage de placage particulièrement « mou ».

Toujours pour une utilisation dans le domaine de la carrosserie automobile, d'autres matériaux composites constitués de tôles co-laminées associent des alliages 6xxx entre eux.

La demande WO 2009/059826 A1 de « Novelis Inc. » décrit, pour cette utilisation, un matériau composite de tôles en alliage d'aluminium, dans lequel une tôle de placage ou « clad » est appliquée sur au moins un côté d'une tôle d'âme ou coeur, dont les compositions, en pourcentages pondéraux, sont telles que ci-dessous :

| | **Si** | **Fe** | **Cu** | **Mn** | **Mg** | **Cr** | **Zn** | **Ti** |
|---|---|---|---|---|---|---|---|---|
| Ame | 0.9 - 1.4 | < 0.3 | 0.75 - 1.4 | < 0.4 | 0.9 - 1.4 | < 0.2 | < 0.05 | <0.05 |
| Placage | 0.3 - 0.8 | < 0.3 | < 0.3 | < 0.3 | 0.3 - 0.7 | < 0.05 | < 0.05 | < 0.05 |

autres éléments < 0.05 chacun et 0.15 au total, reste aluminium.

Les fortes teneurs en magnésium, silicium et cuivre de l'alliage d'âme ainsi que les fortes teneurs en magnésium et silicium de l'alliage constituant la tôle de placage permettent à la tôle plaquée d'obtenir une résistance mécanique très élevée après mise en forme et cuisson des peintures. La résistance à la corrosion de l'alliage d'âme, qui est fortement chargé en cuivre, est améliorée en surface par le placage. Mais la sertissabilité du matériau composite, bien que meilleure que celle d'une tôle en alliage AA6111, reste limitée en particulier après prédéformation. La stabilité de la sertissabilité dans le temps, la performance en emboutissage ainsi que la qualité de surface après mise en forme, en particulier la présence de lignage, ne sont pas abordées.

La demande EP 2 052 851 A1 de « Aleris Aluminum Duffel BVBA » décrit, toujours pour cette utilisation, un matériau composite de tôles en alliage d'aluminium, dont les compositions, en pourcentages pondéraux, sont telles que ci-dessous :

| | **Si** | **Fe** | **Cu** | **Mn** | **Mg** | **Cr** | **Zn** | **Ti** |
|---|---|---|---|---|---|---|---|---|
| Ame | 1.0 | 0.23 | 0.15 | 0.07 | 0.6 | 0.03 | <0.05 | 0.02 |
| Placage | 0.4 - 0.9 | < 0.3 | < 0.25 | <0.5 | 0.4 - 0.8 | < 0.3 | < 0.3 | ≤ 0.35 |

autres éléments < 0.05 chacun et 0.15 au total, reste aluminium.

Les revendications insistent sur le fait que le placage doit avoir une teneur en cuivre inférieure à 0.25% ou préférentiellement inférieure à 0.20%, et de préférence appartenir à la série AA6005 ou AA6005A alors que l'alliage d'âme peut contenir jusqu'à 1.1% de cuivre. Ici encore, l'objet de l'invention semble être l'amélioration de la résistance à la corrosion et de la sertissabilité d'alliages d'âme à haute résistance mécanique ayant une teneur en cuivre élevée. La stabilité de la sertissabilité dans le temps, la performance en emboutissage ainsi que la qualité de surface après mise en forme, en particulier la présence de lignage, ne sont pas abordées. La demande FR2922 222 A1 de "Alcan International Limited" décrit un matériau composite de tôles en alliage d'aluminium pour composants de carrosserie automobile, dans lequel une feuille de placage est appliquée sur au moins un côté d'une âme, celle-ci étant constituée d'un alliage d'aluminium de la série AA6xxx et la feuille de placage étant constituée d'un autre alliage d'aluminium de la même série AA6xxx.

Enfin, la demande EP 2 156 945 A1 de « Novelis Inc. » décrit, toujours pour cette utilisation, un matériau composite de tôles en alliage d'aluminium, dont les compositions, en pourcentages pondéraux, sont telles que ci-dessous :

| | **Si** | **Fe** | **Cu** | **Mn** | **Mg** | **Cr** | **Zn** | **Ti** |
|---|---|---|---|---|---|---|---|---|
| Ame | 0.45 - 0.7 | ≤ 0.35 | 0.05 - 0.25 | 0.05 - 0.2 | 0.45 - 0.8 | < 0.05 | < 0.05 | < 0.05 |
| Placage | 0.3 - 0.7 | ≤ 0.35 | < 0.05 | ≤ 0.15 | 0.3 - 0.7 | < 0.05 | < 0.05 | < 0.05 |

autres éléments < 0.05 chacun et 0.15 au total, reste aluminium.

Cette dernière référence fait apparaître dans les figures 1 à 4, une variation nette de l'aptitude au pliage avec le temps de maturation, ce qui peut poser problème en conditions industrielles selon lesquelles ledit temps est bien souvent variable. Si le matériau selon l'invention semble avoir résolu ce problème, sa résistance mécanique après mise en forme et cuisson des peintures reste limitée. La performance en emboutissage ainsi que la qualité de surface après mise en forme, en particulier la présence de lignage, ne sont pas abordées.
Comme expliqué, la performance en emboutissage et le phénomène de lignage, bien connu de l'homme du métier et se traduisant par des rugosités alignées créées lors de la mise en forme, ne sont abordés par aucune des références précitées. Aucun des matériaux de l'état de l'art ne permet d'atteindre le compromis optimal ici recherché pour une application dans la caisse en blanc automobile, entre bonne formabilité en emboutissage et en sertissage à l'état de livraison, stabilité de ces propriétés de formabilité et notamment de l'aptitude au pliage en fonction du temps de maturation, résistance mécanique suffisamment élevée après mise en forme et cuisson des peintures, résistance à la corrosion en surface et à coeur, et bon aspect de surface sur pièce après mise en forme ou mise en forme et peinture.

Au contraire, le matériau selon l'invention, par l'association d'un alliage d'âme particulièrement emboutissable et présentant une résistance mécanique suffisante et d'un alliage de placage plus sertissable et présentant un excellent aspect de surface après mise en forme, mais tous deux appartenant à la famille des alliages 6000, et donc aptes au durcissement lors du traitement de cuisson des peintures, permet de combiner une aptitude à la mise en forme, en particulier à l'emboutissage et au sertissage à l'état métallurgique T4 ou pré-revenu T4P, et des niveaux de caractéristiques mécaniques finales après cuisson des peintures, qualité d'aspect et résistance à la corrosion tout à fait avantageux.

### Problème posé

L'invention vise à obtenir ce compromis optimal de propriétés souvent considérées comme antagonistes, en proposant un matériau composite en alliages d'aluminium pour composants de carrosserie automobile présentant une composition optimisée, assurant une formabilité suffisante, stable dans le temps et meilleure que l'état de la technique, pour emboutissage profond et sertissage en conditions sévères, une résistance à l'indentation suffisante grâce à un durcissement marqué lors de la cuisson des peintures, tout en maîtrisant la qualité d'aspect, le retour élastique, un bon comportement en assemblage selon les divers procédés utilisés en carrosserie automobile, une découpe sans formation de paillettes, et une bonne résistance à la corrosion en particulier à la corrosion filiforme et intergranulaire ainsi qu'une recyclabilité aisée. Il s'agit également de réduire au minimum le phénomène de lignage créé lors de la mise en forme.

### Objet de l'invention

L'invention a pour objet un matériau composite de tôles en alliage d'aluminium pour composants de carrosserie automobile, dans lequel une tôle de placage, ou « clad », est appliquée sur au moins un côté d'une âme, ou coeur, les compositions, en pourcentages pondéraux, étant telles que ci-dessous :

| | **Si** | **Fe** | **Cu** | **Mn** | **Mg** | **Cr** | **Zn** | **Ti** |
|---|---|---|---|---|---|---|---|---|
| Ame | 1.1 - 1.3 | < 0.3 | < 0.3 | 0.05 - 0.3 | 0.4 - 0.8 | < 0.2 | <0.3 | < 0.2 |
| Placage | 0.45 - 0.65 | < 0.3 | < 0.3 | 0.05 - 0.3 | 0.15 - 0.30 | < 0.2 | < 0.3 | < 0.2 |

autres éléments < 0.05 chacun et 0.15 au total, reste aluminium. La teneur en silicium de l'âme est comprise entre 1.1 et 1.3. En ce qui concerne la teneur en magnésium de l'âme elle est avantageusement comprise entre 0.4 et 0.7, tout comme la teneur en manganèse de l'âme est avantageusement comprise entre 0.05 et 0.2, alors que la teneur en cuivre de l'âme peut être limitée à 0.2 pour des applications en conditions de corrosion sévères. En ce qui concerne la teneur en silicium de la tôle de placage elle est comprise entre 0.45 et 0.65, la teneur en magnésium de la tôle de placage est avantageusement comprise entre 0.23 et 0.29 alors que la teneur en manganèse de la tôle de placage est avantageusement comprise entre 0.10 et 0.30.
Généralement, la tôle de placage est appliquée sur l'âme par co-laminage.
Selon un mode de réalisation particulier, une tôle de placage est appliquée sur un seul côté de l'âme.
Selon un autre mode, une tôle de placage est appliquée sur chacun des deux côtés de l'âme.
Selon une variante de l'invention, l'épaisseur de la, ou de chaque, tôle de placage représente 5 % de l'épaisseur totale du matériau composite et, selon une autre variante, elle représente 10 % de l'épaisseur totale du matériau composite.
Typiquement, le matériau composite de tôles selon l'invention présente un « angle de pliage trois points » α mesuré selon la norme NF EN ISO 7438, à l'état T4P après 10% de prédéformation en traction (α_{10%}), soit mis en solution, trempé, pré-revenu par bobinage, typiquement entre 50 et 85°C, et refroidi lentement en bobine jusqu'à température ambiante, d'au moins 140° après une prédéformation de 10 % en traction.
Par ailleurs, cet « angle de pliage trois points » α_{10%}, obtenu juste après une prédéformation de 10 % en traction, d'au moins 140°, est sensiblement invariable avec le temps d'attente à température ambiante après refroidissement de la bobine, soit une évolution typiquement de moins de 5°, pour un temps d'attente jusqu'à au moins 6 mois.
Une autre caractéristique typique du matériau selon l'invention est qu'il présente une limite d'élasticité Rp_{0,2}, après mise en solution, trempe, pré-revenu par bobinage, typiquement entre 50 et 85°C, et refroidissement lent en bobine jusqu'à température ambiante, pré-déformation en traction de 2 %, et traitement de cuisson des peintures de 20 min. à 185°C, au minimum de 200 MPa voire 220 MPa ce qui représente un durcissement lors de la mise en forme et cuisson des peintures d'au moins 80MPa.

Avantageusement, le matériau composite de tôles selon l'invention est utilisé pour fabriquer une tôle de carrosserie automobile.
Selon différents modes de réalisation, la tôle de carrosserie selon l'invention est une tôle emboutie sous presse ou sertie ou emboutie sous presse et sertie.

Enfin, l'invention englobe également un procédé de fabrication du matériau composite de tôles en alliages d'aluminium pour composants de carrosserie automobile selon l'une des variantes précitées, dans lequel on applique par co-laminage une tôle de placage sur au moins un côté d'une âme, les compositions de l'âme et de la tôle de placage étant, en pourcentages pondéraux, telles que ci-après :

| | **Si** | **Fe** | **Cu** | **Mn** | **Mg** | **Cr** | **Zn** | **Ti** |
|---|---|---|---|---|---|---|---|---|
| Ame | 1.1 - 1.3 | < 0.3 | < 0.3 | 0.05 - 0.3 | 0.4 - 0.8 | < 0.2 | <0.3 | < 0.2 |
| Placage | 0.45 - 0.65 | < 0.3 | < 0.3 | 0.05 - 0.3 | 0.15 - 0.30 | < 0.2 | < 0.3 | < 0.2 |

autres éléments < 0.05 chacun et 0.15 au total, reste aluminium.

### Description des figures

La figure 1 représente les jeux visibles ou apparents 1 pour un même jeu réel 2 entre le bord serti et les autres éléments de la carrosserie lors d'un « sertissage en goutte » A et lors d'un sertissage conventionnel « à plat » B.
La figure 2 représente le dispositif pour « test de pliage trois points » constitué de deux rouleaux R, d'un poinçon B de rayon r pour procéder au pliage de la tôle T d'épaisseur t.
La figure 3 représente la tôle T après test de « pliage trois points » avec l'angle interne β et l'angle externe, résultat mesuré du test : α.
La figure 4 représente les résultats du test de « pliage trois points » effectué sur des tôles de 1mm à l'état T4P après une prédéformation de 10% en traction, soit mises en solution, trempées, et pré-revenues par bobinage, typiquement entre 50 et 85°C, et refroidies lentement, puis prédéformées de 10% en traction juste avant d'effectuer le test de «pliage 3 points », soit, en ordonnée, l'angle externe α_{10%} en degrés, pour des tôles d'âme Ai, de placage Pi, et composite Ci, pour les matériaux de référence A3, P3, C3 et, selon l'invention : A1, P1, C1 et A2, P2, C2.
La figure 5 représente la variation dudit angle α_{10%}, en degrés, mesuré à l'état T4P après 10% de prédeformation en traction, pour la tôle d'âme A1, la tôle de placage P1 et le matériau composite selon l'invention C1 obtenu à partir desdites plaques, en fonction du temps t, en jours d'attente (ou maturation) à température ambiante après refroidissement de la bobine.
La figure 6 représente, en ordonnée, l'angle α_{10%} en degrés, mesuré à l'état T4P après 10% de prédeformation en traction, et en abscisse la limite d'élasticité Rp_{0,2}-BH en MPa, mesurée après mise en solution, trempe, prérevenu, pré-déformation en traction de 2 %, et traitement de cuisson des peintures de 20 min. à 185°C, pour différentes tôles monolithiques de référence A1, A3, P1, P2, P3, M1, M2, M3, M4, et pour les deux matériaux composites de tôles selon l'invention, C1 et C2.
La figure 7 représente en ordonnée l'angle α_{10%} en degrés, mesuré à l'état T4P après 10% de prédeformation en traction, et, en abscisse, la limite d'élasticité Rp0,2-BH en MPa, pour les matériaux composites selon l'invention C1 et C2, pour le matériau composite hors invention C3, ainsi que pour leurs constituants A1, A3, P1, P2, P3.
La figure 8 précise les dimensions en mm des outils utilisés pour déterminer la valeur du paramètre connu de l'homme du métier sous le nom de LDH (Limit Dome Height) caractéristique de l'aptitude à l'emboutissage du matériau.

### Description de l'invention

L'invention repose sur l'utilisation d'un matériau composite de tôles dans lequel une tôle de placage est appliquée sur au moins un côté d'une âme, toutes deux en alliage d'aluminium de la même série et de compositions spécifiques, et sur la constatation inattendue réalisée par la demanderesse que la combinaison d'un alliage d'âme ou de coeur, « dur » mais difficilement formable, et de l'alliage de peau de la tôle de placage ou « clad », formable mais insuffisamment résistant, permet d'obtenir, malgré des épaisseurs de placage relativement faibles, un matériau doté d'une très bonne aptitude à la mise en forme, en particulier à l'état métallurgique T4, c'est-à-dire après trempe, et à hautes caractéristiques mécaniques, notamment après traitement de cuisson des peintures éventuellement associé à un traitement de pré-revenu tel que précédemment cité.
Les compositions spécifiques précitées sont, en pourcentages pondéraux, telles que ci-dessous :

| | **Si** | **Fe** | **Cu** | **Mn** | **Mg** | **Cr** | **Zn** | **Ti** |
|---|---|---|---|---|---|---|---|---|
| Ame | 1.1 - 1.3 | < 0.3 | < 0.3 | 0.05 - 0.3 | 0.4 - 0.8 | < 0.2 | <0.3 | < 0.2 |
| Placage | 0.45 - 0.65 | < 0.3 | < 0.3 | 0.05 - 0.3 | 0.15 - 0.30 | < 0.2 | < 0.3 | < 0.2 |

autres éléments < 0.05 chacun et 0.15 au total, reste aluminium.

Les plages de concentration imposées aux éléments constitutifs de chaque alliage s'expliquent par les raisons suivantes :
Si améliore les propriétés mécaniques en précipitant avec Mg sous forme de Mg₂Si lors de la cuisson des peintures. Un excès de silicium par rapport à la stoechiométrie de Mg₂Si est favorable pour obtenir une bonne formabilité en emboutissage et un durcissement important lors de la cuisson des peintures. En revanche, une teneur trop élevée est nuisible à la formabilité en sertissage.
De ce fait, la fourchette est constituée de valeurs plus élevées pour l'alliage d'âme que pour l'alliage de placage.

Mg, dès 0,15 %, associé comme vu plus haut à Si, permet, en fonction des conditions du pré-revenu éventuel, le durcissement lors de la cuisson des peintures. La plage de concentration comporte donc de façon logique des valeurs de 0.4 à 0.8 % plus élevées pour l'alliage d'âme, pour lequel on recherche une résistance importante, par rapport à 0.15 à 0.30 % (avec un optimum de 0.23 à 0.29 %) pour l'alliage de placage pour lequel on favorise la formabilité, en particulier par pliage. Un minimum de 0.15 % dans le placage, associé à des teneurs en Si relativement élevées, est suffisant pour obtenir une résistance à l'indentation convenable.
La teneur en magnésium dans le placage est volontairement limitée à 0.3% de manière à obtenir une excellente aptitude au pliage quelle que soit la durée d'attente entre la fin de la transformation du matériau et la mise en forme par pliage ou sertissage.

Mn améliore l'aptitude au pliage du fait de la formation avec Si de dispersoïdes du type Al-Mn-Si, de son action sur la formation des phases eutectiques au fer « alpha » pendant la coulée et l'homogénéisation, plus favorables pour la formabilité que la phase « beta », et de son action sur le contrôle de la taille de grains finale. Il limite également la sensibilité à la trempe en évitant une concentration trop importante de précipités aux joints de grains.
A fortes teneurs, le risque de formation de composés intermétalliques et primaires grossiers est important, avec une réduction sensible de la ductilité et de la formabilité.

Fe, qui constitue de façon générale une impureté pour l'aluminium, est peu soluble dans l'aluminium et se retrouve donc sous la forme de particules de secondes phases, par exemple FeAl₃ ou Al(Fe,Mn)Si, souvent préférentiellement présentes aux joints de grains et défavorables à la formabilité, en particulier en pliage. De ce fait, sa teneur est limitée à 0.3 % dans l'alliage de placage et dans l'alliage d'âme, même si cet effet est moins limitant selon le principe même de l'invention, du fait de la présence de la tôle de placage très sertissable.

Cu contribue au durcissement de l'alliage lors de la cuisson des peintures. Toutefois, son effet négatif sur la résistance à la corrosion, essentiellement filiforme, amène à limiter sa valeur à 0.3 % dans l'alliage d'âme et dans l'alliage de placage constituant la peau du matériau composite et donc directement exposé à ce type de corrosion. Pour certaines applications sensibles et selon les modes et types de revêtement, en particulier pour application à des panneaux extérieurs, notamment sertis, cette limite peut être ramenée à 0.2 %.
Par ailleurs, l'alliage d'âme peut-être en contact plus ou moins direct avec l'extérieur, notamment via des bords découpés ou perçés ou après un ponçage conséquent de la peau pour corriger des défauts de surface ou lors de réparations. Les opérations d'assemblage, notamment par soudage, peuvent également emmener en surface des éléments de l'âme. Pour s'adapter à ces situations, la teneur en Cu de l'âme est également limitée à 0.3 %.

Zn contribue à améliorer quelque peu les caractéristiques mécaniques mais surtout, pour des teneurs jusqu'à 0.3 %, il a un effet positif sur la résistance à la corrosion structurale intergranulaire. De ce fait, son addition dans cette proportion à l'alliage d'âme, surtout contenant du cuivre, peut s'avérer avantageuse. Au-delà de cette limite, son effet négatif sur la formabilité et le risque de trop diminuer le potentiel de corrosion lui font perdre tout intérêt.

Enfin, Ti et Cr permettent de contrôler la taille du grain et, pour application aux feuilles de placage, d'éviter l'apparition de peau d'orange lors de déformations sévères comme le sertissage ou l'emboutissage profond. Leur teneur est limitée pour chacun à 0.2 % du fait, à l'inverse, de leur effet défavorable sur la formabilité pour des concentrations plus importantes.

Le matériau composite peut comporter une seule tôle de placage. Dans ce cas la feuille ou tôle de placage est, pour application à un panneau serti, placée de manière à ce que lors de l'opération de sertissage, elle se retrouve à l'extérieur. Il peut aussi contenir une tôle de placage sur chaque face de la tôle d'alliage de coeur ou d'âme.

L'épaisseur de la (ou de chaque) tôle de placage est de 5 à 10 % de l'épaisseur totale du matériau composite. En effet, dès de faibles épaisseurs de revêtement, typiquement de 3 %, une amélioration très sensible de formabilité, notamment au pliage et à l'emboutissage, est observée alors que les caractéristiques mécaniques, notamment la limite d'élasticité Rp_{0,2}, ne sont que très légèrement affectées. Au-delà de 20 % de l'épaisseur totale, dans le cas de deux tôles de placage d'une épaisseur supérieure à 10 % pour chacune, la perte en caractéristiques mécaniques devient trop importante pour justifier de l'intérêt de l'invention par rapport à une tôle monolithique.
Plus précisément, l'épaisseur de la, ou de chaque, tôle de placage est choisie à 5 % pour favoriser une baisse minimum de la résistance mécanique ou à 10 % pour conserver une formabilité ou une capacité d'absorption d'énergie en cas de choc satisfaisantes.

On notera par ailleurs que la tôle de placage utilisée pour le matériau composite selon l'invention permet d'obtenir une excellente qualité de surface, et notamment l'absence ou la présence très minime de ce que l'homme du métier connaît sous l'appellation de lignage, rugosités alignées créées lors de la mise en forme, et qu'il permet également de masquer un comportement éventuellement moins performant de l'âme.

Enfin, la présente invention concerne également la fabrication de tels matériaux composites de tôles dans lequel une tôle de placage en alliage de composition précitée, est appliquée sur au moins un côté d'une tôle d'âme, ou de coeur, en alliage de composition également précitée.
Celle-ci comporte auparavant la préparation, par coulée et éventuellement laminage, d'une plaque en alliage d'âme et d'une plaque, ou deux plaques dans le cas de placage sur les deux faces de l'âme, d'épaisseur(s) différente(s) de celle de l'âme.

Ces plaques correspondent aux deux ou trois tôles du produit composite à réaliser. Elles sont ensuite superposées puis l'ensemble est laminé à chaud, et éventuellement, si l'épaisseur finale à atteindre le nécessite, laminé à froid.
Le laminage se fait en un certain nombre de passes avec, si nécessaire, un ou des recuits intermédiaires entre certaines passes.

Bien entendu, l'utilisation de ce procédé, le plus courant, n'est pas exclusive ; le matériau selon l'invention peut être obtenu par un procédé de coulée semi-continue verticale de plaques comportant au moins deux alliages d'aluminium (âme et placage(s)), par coulées simultanées, typiquement à l'aide d'au moins un séparateur, tel que notamment, mais non exclusivement, le procédé décrit dans la demande de brevet français 11/02197 du 12 juillet 2011 de la demanderesse.

Dans ses détails, l'invention sera mieux comprise à l'aide des exemples ci-après, qui n'ont toutefois pas de caractère limitatif.

### Exemples

### Préambule - Test d'aptitude au sertissage

L'aptitude au sertissage des divers matériaux testés est mesurée par un « test de pliage trois points » suivant la norme NF EN ISO 7438.
Le dispositif de pliage est tel que présenté en figure 2.
On effectue tout d'abord une pré-déformation en traction de 10 % de la tôle T selon la direction de laminage, puis on effectue le « pliage trois points » proprement dit en utilisant un poinçon B de rayon r = 0.2 mm, la tôle étant supportée par deux rouleaux R, l'axe de pliage étant perpendiculaire à la direction de laminage et de pré-traction. Les rouleaux ont un diamètre de 30 mm et la distance entre les axes des rouleaux est égale à 30 + 2t mm., t étant l'épaisseur de la tôle testée T.
Au début de l'essai le poinçon est mis en contact avec la tôle avec une pré-force de 30 Newtons. Une fois le contact établi, le déplacement du poinçon est indexé à zéro. Le test consiste alors à déplacer le poinçon de manière à effectuer le « pliage trois points » de la tôle.

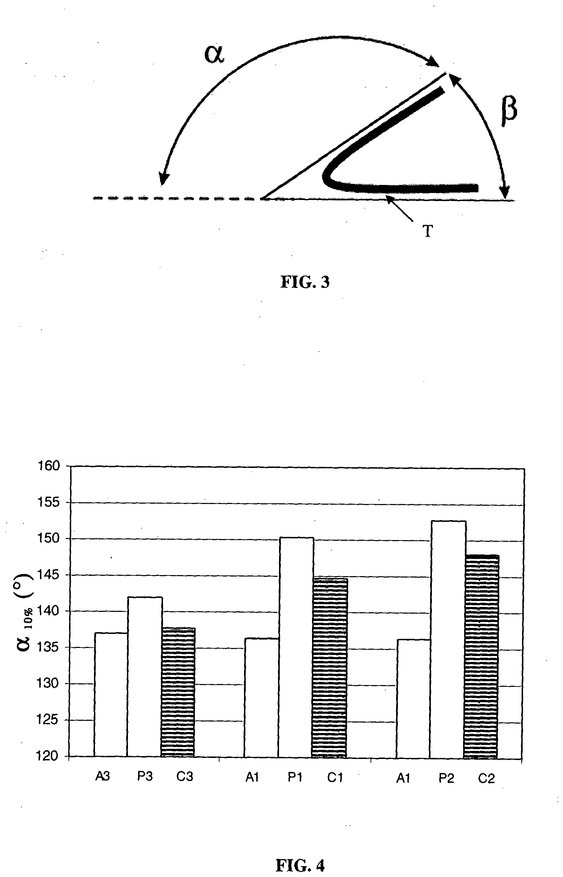

Le test s'arrête lorsqu'une microfissuration de la tôle conduit à une chute de force sur le poinçon d'au moins 30 Newtons, ou bien, s'il n'y a pas de microfissuration, lorsque le poinçon s'est déplacé de 14,2 mm, ce qui correspond à la course maximale autorisée.
A la fin du test, l'échantillon de tôle se retrouve donc plié comme illustré en figure 3. L'aptitude au sertissage s'évalue alors par la mesure de l'angle de pliage α en degrés. Plus l'angle α est élevé, meilleure est l'aptitude au sertissage ou au pliage de la tôle.

### Exemple 1

Les matériaux composites de tôles utilisés dans cet exemple ont été réalisés par co-laminage à chaud, procédé bien connu de l'homme du métier et tel qu'utilisé pour la réalisation de tôles de brasage.
A partir d'une tôle d'âme A et de deux tôles de placage plus fines P, on a réalisé trois fois par co-laminage à chaud, laminage à chaud, puis laminage à froid, un matériau composite C d'une épaisseur finale totale de 1 mm comportant donc sur chaque face deux tôles plaquées représentant chacune 5 % de l'épaisseur totale de 1 mm soit 50 microns.
Le matériau composite C1 selon l'invention est composé d'une tôle d'âme de composition A1 et de deux tôles de placage de même composition P1.
Le matériau composite C2 selon l'invention est composé d'une tôle d'âme de composition A1 et de deux tôles de placage de même composition P2.
A titre de comparaison, un troisième matériau composite C3 a également été réalisé à partir d'une tôle d'âme de composition A3 et de deux tôles de placage de même composition P3.
Les compositions des tôles constituant ces trois matériaux composites, exprimées en pourcentages pondéraux, sont récapitulées dans le Tableau 1 ci-dessous :

**Tableau 1**

| | **Si** | **Fe** | **Cu** | **Mn** | **Mg** | **Cr** |
|---|---|---|---|---|---|---|
| A1 | 1.24 | 0.19 | 0.22 | 0.07 | 0.40 | 0.01 |
| P1 | 0.52 | 0.24 | 0.09 | 0.17 | 0.25 | 0.01 |
| P2 | 0.56 | 0.24 | 0.09 | 0.30 | 0.25 | 0.01 |
| A3 | 1.19 | 0.20 | 0.22 | 0.08 | 0.32* | 0.01 |
| P3 | 0.60 | 0.13 | 0.09 | 0.18 | 0.66* | 0.03 |

| | | | | | | |
|---|---|---|---|---|---|---|
| * valeur hors de la portée de l'invention | | | | | | |

autres éléments < 0.05 chacun et 0.15 au total, reste aluminium.
Après le laminage à froid, les trois matériaux composites de tôles ont été mis en solution à 530°C, trempés et pré-revenus par bobinage à environ 85°C avec refroidissement lent en bobine à l'air ambiant.
Parallèlement à cela, cinq autres plaques correspondant à chacune des compositions du Tableau 1 ont été transformées de façon standard de manière à obtenir des tôles, d'une épaisseur de 1 mm à l'issue du laminage à chaud, de chacun des constituants des composites. La suite de la gamme de transformation a été identique pour les trois composites de tôles, C1, C2, C3 et pour les cinq tôles monolithiques A1, P1, P2, A3, P3.
Après une attente de deux semaines à température ambiante, l'aptitude au sertissage des différents matériaux, se trouvant alors dans l'état métallurgique dit T4P, a été évaluée conformément au mode opératoire décrit en préambule.
On notera que la pré-traction de 10 % permet de simuler le comportement en sertissage de zones préalablement fortement déformées lors de la mise en forme réelle par emboutissage. Elle permet également de sévériser le test de pliage 3 points de manière à ce que la plupart des matériaux standards utilisés sous forme de tôles pour carrosserie automobile (AA6111, AA6016, AA6014, AA6005A) commencent de fissurer avant que le poinçon n'ait atteint sa course maximale de 14,2 mm.
Les résultats de ces tests sont présentés en figure 4. On constate que les angles de pliage après prédéformation de 10% en traction des deux matériaux A1 et A3, constituant les âmes des composites, sont voisins, même si A3 se plie légèrement mieux que A1.
En revanche, les trois matériaux P1, P2 et P3, constituant les placages des composites, ont des comportements nettement différents : P1 et P2, conformes à l'invention, possèdent des angles de pliage α_{10%} supérieurs à 140° alors que P3, non conforme, est le matériau le moins pliable des trois. Globalement, si l'on compare les trois matériaux, P2 est le matériau le plus pliable et P3 le moins performant.
Il est intéressant de constater que la performance en pliage des matériaux composites se rapproche de celle de leurs couvertures respectives, et ceci alors même que le taux de placage sur la face externe de l'échantillon plié n'est que de 5 % de l'épaisseur totale du matériau composite. Ainsi, C2 est le matériau le plus pliable et C3 le moins performant.
Les matériaux composites C1 et C2 selon l'invention possèdent un angle de pliage après une prédéformation de 10% supérieur à 140° contrairement au matériau C3 hors invention.

### Exemple 2

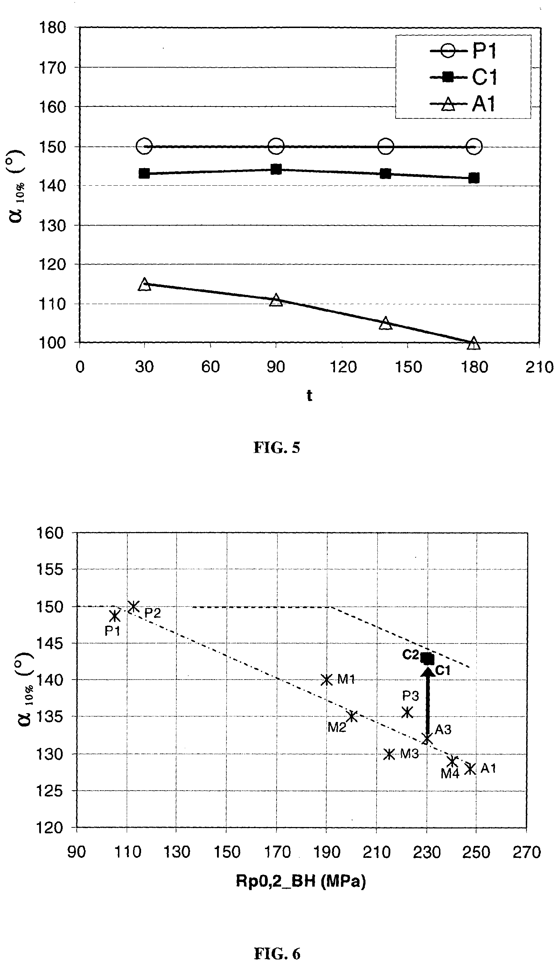

Les mêmes trois matériaux A1, P1 et C1 de l'exemple 1 ont été utilisés.
On a étudié ici l'influence du temps d'attente à la température ambiante entre la fin de transformation de la bobine telle qu'à l'exemple 1 et la réalisation du test de pliage, ou temps de maturation. En effet, dans le processus industriel, existe souvent une période d'attente entre la livraison de la tôle et son utilisation pour la fabrication d'une pièce de carrosserie, cette période étant variable mais pouvant atteindre jusqu'à 6 mois.
Les tôles A1, P1 et C1 ont donc, après une attente à température ambiante de durée variable, subi le « test de pliage trois points » tel que précédemment.
Les résultats sont présentés en figure 5 avec, en ordonnée, les valeurs d'angle de pliage en degrés et en abscisse, ladite durée d'attente en jours.
On constate que l'aptitude au pliage du matériau P1 constituant le placage du composite C1 est excellente puisque l'angle α de 150° est obtenu pour une course du poinçon de 14,2 mm, soit la course du poinçon maximale autorisée dans ce test. On remarque également que cette valeur est atteinte et stable quelle que soit la durée d'attente, ou de maturation.
Le matériau A1 constituant l'âme du composite présente une moins bonne aptitude au pliage, avec des valeurs d'angle α nettement inférieures à 140°. De plus, on constate que sur ce matériau l'attente est clairement néfaste conduisant à une valeur d'angle α de seulement 100° après 6 mois.
Le matériau composite C1 selon l'invention, constitué d'une âme de composition A1 plaquée de deux couches de 50 microns de composition P1, présente une très bonne aptitude au pliage, avec des valeurs d'angle α supérieures à 140°. Il est très intéressant de constater que la performance en pliage de ce matériau composite C1 selon l'invention ne se dégrade pas au cours du temps lorsque l'attente se prolonge. Ici encore la performance en pliage du placage semble contrôler au premier ordre la performance en pliage du composite.
La réalisation du matériau composite C1 selon l'invention permet donc d'améliorer de façon très nette la performance en pliage du matériau monolithique d'âme A1, d'une part en augmentant la valeur de l'angle α quasiment au niveau de celle de son placage P1, et d'autre part en rendant l'aptitude au pliage du composite C1 insensible à l'attente entre la fin de transformation de la bobine et le pliage jusqu'à une durée de 6 mois, soit une évolution typiquement de moins de 5°.

### Exemple 3

Dans cet exemple, les deux matériaux composites de l'exemple 1, C1 et C2, selon l'invention, ont été utilisés.
A titre de comparaison, plusieurs tôles monolithiques en alliages 6xxx ont été fabriquées selon le même mode (coulée semi continue verticale, homogénéisation, laminage à chaud, laminage à froid puis mise en solution trempe et pré-revenu).
Les compositions exprimées en pourcentages pondéraux des tôles monolithiques sont récapitulées dans le tableau 2 ci-dessous.

**Tableau 2**

| | **Si** | **Fe** | **Cu** | **Mn** | **Mg** | **Cr** |
|---|---|---|---|---|---|---|
| A1 | 1.24 | 0.19 | 0.22 | 0.07 | 0.40 | 0.01 |
| P1 | 0.52 | 0.24 | 0.09 | 0.17 | 0.25 | 0.01 |
| P2 | 0.56 | 0.24 | 0.09 | 0.30 | 0.25 | 0.01 |
| A3 | 1.19 | 0.20 | 0.22 | 0.08 | 0.32∗ | 0.01 |
| P3 | 0.60 | 0.13 | 0.09 | 0.18 | 0.66∗ | 0.03 |
| M1 | 0.57 | 0.24 | 0.08 | 0.13 | 0.53∗ | 0.03 |
| M2 | 1.09∗ | 0.26 | 0.09 | 0.18 | 0.38∗ | 0.04 |
| M3 | 1.05∗ | 0.26 | 0.09 | 0.16 | 0.37∗ | 0.03 |
| M4 | 1.05∗ | 0.25 | 0.08 | 0.15 | 0.42∗ | 0.03 |

| | | | | | | |
|---|---|---|---|---|---|---|
| * valeur hors de la portée de l'invention. | | | | | | |

autres éléments < 0.05 chacun et 0.15 au total, reste aluminium.
On a d'une part mesuré la limite d'élasticité conventionnelle Rp_{0,2} selon la norme NF EN 10002-1 après pré-déformation en traction de 2 % et traitement thermique de 20 minutes à 185°C simulant la mise en forme puis la cuisson des peintures lors de la fabrication de pièces de carrosserie automobile (appelée Rp_{0.2} - BH).

D'autre part, après une attente de 45 jours à température ambiante, l'aptitude au sertissage des différents matériaux se trouvant dans l'état métallurgique dit T4P, a été évaluée selon le même mode que précédemment.
Ces deux caractéristiques, à savoir aptitude au sertissage à l'état T4P avec 45 jours d'attente et 10 % de pré-déformation ainsi que Rp_{0,2}-BH après pré-déformation de 2 % et 20 min. à 185°C, représentent assez bien la performance que l'on attend d'une tôle destinée à la fabrication de pièces de carrosserie.
En effet, la tôle doit d'abord être apte au sertissage après mise en forme à l'état T4P et elle doit également conduire à une limite d'élasticité en service, c'est à dire celle de la pièce automobile montée sur le véhicule assemblé, après mise en forme et cuisson des peintures, élevée.

Les résultats sont présentés en figure 6 avec, en ordonnée, l'angle de pliage α en degrés et, en abscisse Rp_{0,2}-BH en MPa.
On y constate que les points correspondant aux tôles monolithiques s'alignent sur une droite. Les alliages présentant la meilleure aptitude au sertissage présentent de faibles valeurs de Rp_{0,2}-BH. Inversement, les alliages permettant d'atteindre les valeurs de Rp_{0,2}-BH les plus élevés sont moins aptes au sertissage à l'état T4P.
La droite sur laquelle s'alignent les alliages monolithiques représente donc le compromis atteignable entre ces deux propriétés, pour des tôles monolithiques.
On constate, par contre, que les points C1 et C2, correspondant à des tôles composites selon l'invention, présentent une aptitude au sertissage nettement plus élevée, avec un angle de pliage α de 143°, pour une valeur de Rp_{0,2}-BH également élevée de l'ordre de 230 MPa, soit un compromis nettement plus intéressant.

### Exemple 4

Dans cet exemple, ont à nouveau été utilisés les matériaux composites de l'exemple 1.

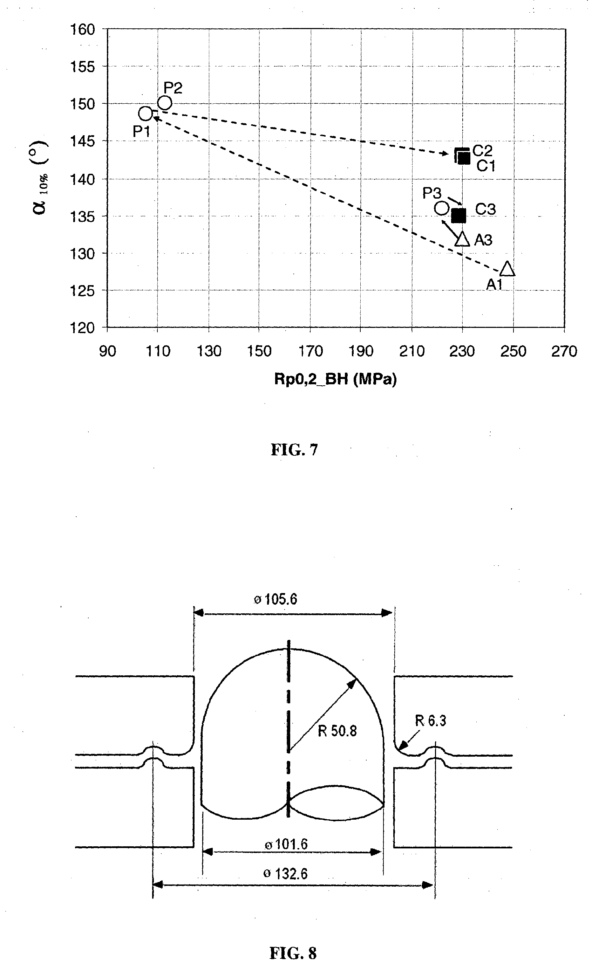

Les mêmes caractérisations que dans l'exemple 3 ont été réalisées, à savoir mesure de la valeur de Rp_{0,2}-BH et test de « pliage trois points » selon le même mode.
Les résultats sont présentés en figure 7 avec, en ordonnée, l'angle de pliage α en degrés et, en abscisse Rp_{0,2}-BH en MPa, comme précédemment.
Dans un premier temps, en considérant les points C1, C2, C3, on constate que, pour une même valeur de Rp_{0,2}-BH, l'aptitude au sertissage selon le test de pliage des matériaux composites C1 et C2 selon l'invention est clairement supérieure à celle du matériau composite C3 hors invention .
Ainsi, bien que l'âme A3 du composite C3 soit plus pliable que l'âme A1 des composites C1 et C2, le fait que les couvertures P1 et P2 soient plus pliables que la couverture P3 se traduit par une moindre aptitude au sertissage ou pliage pour le composite C3.
Ainsi, contrairement à ce qu'enseigne l'état de la technique et notamment la demande EP 1 852 250 A1 de « Aleris Aluminum Duffel BVBA », il est bien plus intéressant de plaquer une âme en alliage AA6016 avec une tôle de placage présentant une faible valeur de Rp_{0,2}-BH mais une excellente aptitude au sertissage ou pliage plutôt que d'utiliser un alliage du type AA6005A pour la tôle de placage. En particulier, le fait que les teneurs en magnésium des tôles de placage des matériaux composites C1 et C2 selon l'invention soient inférieures à 0.3 % améliore de façon significative l'aptitude au sertissage ou pliage.

### Exemple 5

Dans cet exemple, les deux matériaux composites de l'exemple 1, C1 et C2, selon l'invention, ont été à nouveau utilisés et comparés à une tôle monolithique de composition A1 de même épaisseur 1mm également issue de l'exemple 1.
Son objectif est de montrer que le matériau selon l'invention, outre qu'il est doté d'une meilleure aptitude au sertissage après mise en forme à l'état T4P tout en conservant une aptitude importante au durcissement lors de la cuisson des peintures, possède également une meilleure formabilité en emboutissage dans ce même état T4P.

Cette dernière caractéristique a été évaluée au travers de la détermination du paramètre connu de l'homme du métier sous le nom de LDH (Limit Dome Height). Celui-ci est largement utilisé pour l'évaluation de l'aptitude à l'emboutissage des tôles d'épaisseur de 0,5 à 2 mm. Il a fait l'objet de nombreuses publications, notamment celle de R. Thompson, « The LDH test to evaluate sheet metal formability - Final Report of the LDH Committee of the North American Deep Drawing Research Group », SAE conference, Detroit, 1993, SAE Paper n°930815.
Il s'agit d'un essai d'emboutissage d'un flan bloqué en périphérie par un jonc. La pression de serre-flan est contrôlée pour éviter un glissement dans le jonc. Le flan, de taille 120x160 mm, est sollicité dans un mode proche de la déformation plane. Le poinçon utilisé est hémisphérique.
La figure 8 précise les dimensions des outils utilisés dans cet exemple pour réaliser ce test LDH.
La lubrification entre le poinçon et la tôle est assurée par de la graisse graphitée (graisse Shell HDM2). La vitesse de descente du poinçon est de 50 mm/min. La valeur LDH est le déplacement du poinçon à rupture, soit la profondeur limite de l'emboutissage. On établit la moyenne de trois essais, donnant un intervalle de confiance à 95 % sur la mesure de ± 0,2 mm.
Le tableau 3 ci-après indique les valeurs du paramètre LDH obtenues sur des éprouvettes de 120 x 160 mm découpées dans les tôles précitées et pour lesquelles la dimension de 160 mm était positionnée parallèlement à la direction de laminage.

**Tableau 3**

| | **LDH (mm)** |
|---|---|
| A1 | 26,7 |
| C1 | 27,7 |
| C2 | 27,3 |

On constate que les deux matériaux composites C1 et C2, selon l'invention, possèdent une valeur LDH plus élevée que la tôle monolithique de composition A1 de même épaisseur 1 mm.

### Exemple 6

Cet exemple est destiné à mettre en évidence le comportement du matériau selon l'invention en ce qui concerne l'apparition de lignage lors de la mise en forme.
Pour ce faire, le test de lignage tel que décrit ci après a été mis en oeuvre:
Une bande d'environ 270 mm (dans le sens travers) par 50 mm (dans le sens du laminage) est découpée dans le matériau à tester. Une pré-traction de 15 % dans le sens travers du laminage, soit dans la longueur de la bande, est ensuite appliquée. La bande est ensuite soumise à l'action d'un papier abrasif du type P800 de façon à révéler ledit défaut de lignage. Celui-ci est alors évalué visuellement et traduit par cotation sur une échelle de 1 (lignage important) à 5 (absence totale de lignage).

Les matériaux composites de tôles utilisés dans cet exemple ont été réalisés par co-laminage à chaud à partir d'une tôle d'âme A4 et de deux tôles de placage P4. On a réalisé deux fois par co-laminage à chaud, laminage à chaud puis laminage à froid, deux matériaux composites C4 et C5 d'une épaisseur finale totale de 1mm comportant sur chaque face deux tôles plaquées représentant chacune respectivement 5 % et 10 % de l'épaisseur finale totale de 1 mm.
Le matériau composite C4 selon l'invention est composé d'une tôle d'âme de composition A4 et de deux tôles de placage de même composition P4. Le matériau C4 comporte sur chaque face deux tôles plaquées représentant chacune 5% de l'épaisseur finale totale.
Le matériau composite C5 selon l'invention est composé d'une tôle d'âme de composition A4 et de deux tôles de placage de même composition P4. Le matériau C5 comporte sur chaque face deux tôles de placage représentant chacune 10 % de l'épaisseur finale totale.

Les compositions des constituants de ces deux matériaux composites exprimées en pourcentages pondéraux sont récapitulées dans le tableau 4 ci-après :

**Tableau 4**

| | **Si** | **Fe** | **Cu** | **Mn** | **Mg** | **Cr** |
|---|---|---|---|---|---|---|
| A4 | 1.12 | 0.24 | 0.17 | 0.16 | 0.66 | 0.03 |
| P4 | 0.55 | 0.25 | 0.18 | 0.09 | 0.26 | 0.02 |

autres éléments < 0.05 chacun et 0.15 au total, reste aluminium.

Parallèlement, une autre plaque correspondant à la composition A4 du tableau 4 a été transformée de manière à obtenir une tôle monolithique d'épaisseur finale de 1mm.

Dans chaque cas présenté ci-dessus, ont été mises en oeuvre deux gammes de laminage à froid, l'une sans recuit intermédiaire (repérée par la suite par l'indice a) et l'autre avec un recuit intermédiaire (indice b) destiné à améliorer l'aspect de surface après mise en forme et peinture.
Après laminage à froid, les différents matériaux de tôles ont été mis en solution à 550°C, trempés, et pré-revenus par bobinage à environ 50°C et refroidissement lent en bobine jusqu'à température ambiante.
Après une attente de deux semaines à température ambiante, le lignage des différents matériaux, se trouvant alors dans un état métallurgique dit T4P, a été évalué conformément au mode opératoire précité.

Les résultats de l'évaluation sont présentés dans le tableau 5 ci-dessous :

**Tableau 5**

| | Cotation |
|---|---|
| A4-a | 1 |
| C4-a | 4 |
| C5-a | 5 |
| A4-b | 4 |
| C4-b | 5 |
| C5-b | 5 |

Il apparait que, dans la cas d'une transformation sans recuit intermédiaire (indice a), l'âme A4-a présente un défaut de lignage important, alors que le matériau composite C4-a, constitué de la même âme A4 et de deux tôles de placage d'une épaisseur de 5 % chacune, présente un très bon aspect de surface qui devient excellent dans le cas du matériau composite C5-a comportant deux tôles de placage d'une épaisseur de 10 % chacune.

Dans le cas où l'âme A4-b elle-même a subi une transformation avec recuit intermédiaire, et possède de ce fait un très bon aspect de surface (cotation 4), les matériaux composites C4-b et C5-b obtenus par placage de cette âme conduisent à des résultats en termes de lignage similaires voire meilleurs (cotation 5).

Ainsi, l'invention permet de s'affranchir du recuit intermédiaire sans nuire à la performance en termes de comportement vis à vis du défaut de lignage.

## Revendications

1. Matériau composite de tôles en alliage d'aluminium pour composants de carrosserie automobile, dans lequel une tôle de placage, ou « clad », d'une épaisseur de 5 à 10 % de l'épaisseur totale du matériau composite, est appliquée sur au moins un côté d'une âme, ou coeur, **caractérisé en ce que** les compositions, en pourcentages pondéraux, sont telles que ci-dessous :
| | **Si** | **Fe** | **Cu** | **Mn** | **Mg** | **Cr** | **Zn** | **Ti** |
|---|---|---|---|---|---|---|---|---|
| Ame | 1.1 - 1.3 | < 0.3 | <0.3 | 0.05 - 0.3 | 0.4 - 0.8 | < 0.2 | <0.3 | < 0.2 |
| Placage | 0.45 - 0.65 | < 0.3 | < 0.3 | 0.05 - 0.3 | 0.15 - 0.30 | < 0.2 | < 0.3 | < 0.2 |
autres éléments < 0.05 chacun et 0.15 au total, reste aluminium.

2. Matériau composite de tôles selon la revendication 1, **caractérisé en ce que** la teneur en magnésium de l'âme est comprise entre 0.4 et 0.7.

3. Matériau composite de tôles selon l'une des revendications 1 ou 2, **caractérisé en ce que** la teneur en manganèse de l'âme est comprise entre 0.05 et 0.2.

4. Matériau composite de tôles selon l'une des revendications 1 à 3, **caractérisé en ce que** la teneur en cuivre de l'âme est limitée à 0.2.

5. Matériau composite de tôles selon l'une des revendications 1 à 4, **caractérisé en ce que** la teneur en magnésium de la tôle de placage est comprise entre 0.23 et 0.29.

6. Matériau composite de tôles selon l'une des revendications 1 à 5, **caractérisé en ce que** la teneur en manganèse de la tôle de placage est comprise entre 0.10 et 0.30.

7. Matériau composite de tôles selon l'une des revendications 1 à 6, **caractérisé en ce que** la tôle de placage est appliquée sur l'âme par co-laminage.

8. Matériau composite de tôles selon l'une des revendications 1 à 7, **caractérisé en ce qu'**une tôle de placage est appliquée sur un seul côté de l'âme.

9. Matériau composite de tôles selon l'une des revendications 1 à 7, **caractérisé en ce qu'**une tôle de placage est appliquée sur chacun des deux côtés de l'âme.

10. Matériau composite de tôles selon l'une des revendications 1 à 9, **caractérisé en ce qu'**il présente un « angle de pliage trois points » α_{10%} mesuré selon la norme NF EN ISO 7438, à l'état T4P, soit mis en solution, trempé, pré-revenu par bobinage, typiquement entre 50 et 85°C, et refroidi lentement en bobine jusqu'à température ambiante, d'au moins 140° après une prédeformation de 10% en traction.

11. Matériau composite de tôles selon l'une des revendications 1 à 10, **caractérisé en ce que** ledit «angle de pliage trois points» α_{10%}, obtenu juste après une prédéformation de 10% en traction, d'au moins 140°, est sensiblement invariable, soit une évolution typiquement de moins de 5°, avec le temps d'attente à température ambiante après refroidissement de la bobine, pour un temps d'attente jusqu'à au moins 6 mois.

12. Matériau composite de tôles selon l'une des revendications 1 à 11, **caractérisé en ce que** sa limite d'élasticité Rp_{0,2}, après mise en solution, trempe, pré-revenu par bobinage, typiquement entre 50 et 85°C, et refroidissement lent en bobine jusqu'à température ambiante, pré-déformation en traction de 2 %, et traitement de cuisson des peintures de 20 min. à 185°C, est au minimum de 200 MPa et de préférence 220 MPa.

13. Matériau composite de tôles selon l'une des revendications 1 à 12, **caractérisé en ce qu'**il présente un « angle de pliage trois points » α_{10%} mesuré selon la norme NF EN ISO 7438, à l'état T4P, soit mis en solution, trempé, pré-revenu par bobinage, typiquement entre 50 et 85°C, et refroidi lentement en bobine jusqu'à température ambiante, d'au moins 140° après une prédéformation de 10% en traction, et **en ce que** sa limite d'élasticité Rp_{0,2}, après mise en solution, trempe, pré-revenu par bobinage, typiquement entre 50 et 85°C, et refroidissement lent en bobine jusqu'à température ambiante, pré-déformation en traction de 2 %, et traitement de cuisson des peintures de 20 min. à 185°C, est au minimum de 200 MPa et de préférence 220 MPa.

14. Tôle de carrosserie automobile **caractérisée en ce qu'**elle est fabriquée à partir du matériau composite de tôles selon l'une des revendications 1 à 13.

15. Tôle de carrosserie automobile selon la revendication 14, **caractérisée en ce qu'**il s'agit d'une tôle emboutie sous presse.

16. Tôle de carrosserie automobile selon l'une des revendications 14 ou 15, **caractérisée en ce qu'**il s'agit d'une tôle sertie.

17. Procédé de fabrication d'un matériau composite de tôles en alliages d'aluminium pour composants de carrosserie automobile selon l'une des revendications 1 à 10, dans lequel on applique par co-laminage une tôle de placage sur au moins un côté d'une âme, **caractérisé en ce que** les compositions de l'âme et de la tôle de placage, en pourcentages pondéraux, sont telles que ci-après :
| | **Si** | **Fe** | **Cu** | **Mn** | **Mg** | **Cr** | **Zn** | **Ti** |
|---|---|---|---|---|---|---|---|---|
| Ame | 1.1 - 1.3 | < 0.3 | < 0.3 | 0.05 - 0.3 | 0.4 - 0.8 | < 0.2 | <0.3 | < 0.2 |
| Placage | 0.45 - 0.65 | < 0.3 | <0.3 | 0.05 - 0.3 | 0.15 - 0.30 | < 0.2 | < 0.3 | < 0.2 |
autres éléments < 0.05 chacun et 0.15 au total, reste aluminium.

## Patentansprüche

1. Blech-Verbundwerkstoff aus Aluminiumlegierung für Kraftfahrzeugkarosserieteile, bei dem ein Plattierblech oder « clad » mit einer Dicke von 5 bis 10 % der Gesamtdicke des Verbundwerkstoffs auf mindestens einer Seite eines Kerns aufgebracht ist, **dadurch gekennzeichnet, dass** die Zusammensetzungen in Gewichtsprozenten wie folgt sind:
| | **Si** | **Fe** | **Cu** | **Mn** | **Mg** | **Cr** | **Zn** | **Ti** |
|---|---|---|---|---|---|---|---|---|
| Kern | 1.1 - 1.3 | < 0.3 | < 0.3 | 0.05 - 0.3 | 0.4 - 0.8 | < 0.2 | < 0.3 | < 0.2 |
| Plattierung | 0.45-0.65 | < 0.3 | < 0.3 | 0.05 - 0.3 | 0.15 - 0.30 | < 0.2 | < 0.3 | < 0.2 |
weitere Elemente jeweils < 0.05 und insgesamt 0.15, Rest Aluminium.

2. Blech-Verbundwerkstoff nach Anspruch 1, **dadurch gekennzeichnet, dass** der Magnesiumgehalt des Kerns zwischen 0.4 und 0.7 liegt.

3. Blech-Verbundwerkstoff nach einem der Ansprüche 1 oder 2, **dadurch gekennzeichnet, dass** der Mangangehalt des Kerns zwischen 0.05 und 0.2 liegt.

4. Blech-Verbundwerkstoff nach einem der Ansprüche 1 bis 3, **dadurch gekennzeichnet, dass** der Kupfergehalt des Kerns höchstens 0.2 beträgt.

5. Blech-Verbundwerkstoff nach einem der Ansprüche 1 bis 4, **dadurch gekennzeichnet, dass** der Magnesiumgehalt des Plattierblechs zwischen 0.23 und 0.29 liegt.

6. Blech-Verbundwerkstoff nach einem der Ansprüche 1 bis 5, **dadurch gekennzeichnet, dass** der Mangangehalt des Plattierblechs zwischen 0.10 und 0.30 liegt.

7. Blech-Verbundwerkstoff nach einem der Ansprüche 1 bis 6, **dadurch gekennzeichnet, dass** das Plattierblech durch Walzplattierung auf dem Kern aufgebracht ist.

8. Blech-Verbundwerkstoff nach einem der Ansprüche 1 bis 7, **dadurch gekennzeichnet, dass** ein Plattierblech nur auf einer Seite des Kerns aufgebracht ist.

9. Blech-Verbundwerkstoff nach einem der Ansprüche 1 bis 7, **dadurch gekennzeichnet, dass** ein Plattierblech auf jeder der beiden Seiten des Kerns aufgebracht ist.

10. Blech-Verbundwerkstoff nach einem der Ansprüche 1 bis 9, **dadurch gekennzeichnet, dass** er einen nach der Norm NF EN ISO 7438 gemessenen Drei-Punkt-Biegewinkel α_{10%} im Zustand T4P, d. h. lösungsgeglüht, abgeschreckt, vorausgelagert durch Aufrollen, typischerweise zwischen 50 und 85°C, und auf Rollen bis auf Raumtemperatur langsam abgekühlt, von mindestens 140° nach einer Zugvorverformung von 10 % aufweist.

11. Blech-Verbundwerkstoff nach einem der Ansprüche 1 bis 10, **dadurch gekennzeichnet, dass** der unmittelbar nach einer Zugvorverformung von 10 % erhaltene Drei-Punkt-Biegewinkel α_{10%} von mindestens 140° sich mit der Wartezeit bei Raumtemperatur nach Abkühlung der Rolle für eine Wartezeit bis zu mindestens 6 Monaten im Wesentlichen nicht verändert.

12. Blech-Verbundwerkstoff nach einem der Ansprüche 1 bis 11, **dadurch gekennzeichnet, dass** seine Dehngrenze Rp_{0,2} nach Lösungsglühen, Abschrecken, Vorauslagern durch Aufrollen, typischerweise zwischen 50 und 85°C, und langsamem Abkühlen auf Rollen bis auf Raumtemperatur, Zugvorverformung von 2 % und Einbrennbehandlung der Lacke während 20 min. bei 185°C mindestens 200 MPa und vorzugsweise 220 MPa beträgt.

13. Blech-Verbundwerkstoff nach einem der Ansprüche 1 bis 12, **dadurch gekennzeichnet, dass** er einen nach der Norm NF EN ISO 7438 gemessenen Drei-Punkt-Biegewinkel α_{10%} im Zustand T4P, d. h. lösungsgeglüht, abgeschreckt, vorausgelagert durch Aufrollen, typischerweise zwischen 50 und 85°C, und auf Rollen bis auf Raumtemperatur langsam abgekühlt, von mindestens 140° nach einer Zugvorverformung von 10 % aufweist und dass seine Dehngrenze Rp_{0,2} nach Lösungsglühen, Abschrecken, Vorauslagern durch Aufrollen, typischerweise zwischen 50 und 85°C, und langsamem Abkühlen auf Rollen bis auf Raumtemperatur, Zugvorverformung von 2 % und Einbrennbehandlung der Lacke während 20 min. bei 185°C mindestens 200 MPa und vorzugsweise 220 MPa beträgt.

14. Kraftfahrzeugkarosserieblech, **dadurch gekennzeichnet, dass** es aus dem Blech-Verbundwerkstoff nach einem der Ansprüche 1 bis 13 hergestellt ist.

15. Kraftfahrzeugkarosserieblech nach Anspruch 14, **dadurch gekennzeichnet, dass** es ein unter einer Presse tiefgezogenes Blech ist.

16. Kraftfahrzeugkarosserieblech nach einem der Ansprüche 14 oder 15, **dadurch gekennzeichnet, dass** es ein gebördeltes Blech ist.

17. Verfahren zur Herstellung eines Blech-Verbundwerkstoffs aus Aluminiumlegierungen für Kraftfahrzeugkarosserieteile nach einem der Ansprüche 1 bis 10, bei dem ein Plattierblech durch Walzplattieren auf mindestens eine Seite eines Kerns aufgebracht wird, **dadurch gekennzeichnet, dass** die Zusammensetzungen des Kerns und Plattierblechs in Gewichtsprozenten wie folgt sind:
| | **Si** | **Fe** | **Cu** | **Mn** | **Mg** | **Cr** | **Zn** | **Ti** |
|---|---|---|---|---|---|---|---|---|
| Kern | 1.1 - 1.3 | < 0.3 | < 0.3 | 0.05 - 0.3 | 0.4 - 0.8 | < 0.2 | < 0.3 | < 0.2 |
| Plattierung | 0.45-0.65 | < 0.3 | < 0.3 | 0.05 - 0.3 | 0.15 - 0.30 | < 0.2 | < 0.3 | < 0.2 |
weitere Elemente jeweils < 0.05 und insgesamt 0.15, Rest Aluminium.

## Claims

1. Composite sheet material made of aluminium alloy for motor vehicle body components, wherein a cladding sheet, or "clad", of a thickness of 5 to 10% of the total thickness of the composite material, is applied to at least one side of a core, **characterised in that** the compositions, in weight percentages, are such as hereinbelow:
| | Si | Fe | Cu | Mn | Mg | Cr | Zn | Ti |
|---|---|---|---|---|---|---|---|---|
| Core | 1.1 - 1.3 | < 0.3 | < 0.3 | 0.05 - 0.3 | 0.4 - 0.8 | < 0.2 | <0.3 | < 0.2 |
| Cladding | 0.45 - 0.65 | < 0.3 | < 0.3 | 0.05 - 0.3 | 0.15 - 0.30 | < 0.2 | < 0.3 | < 0.2 |
other elements < 0.05 each and 0.15 in total, remainder aluminium.

2. Composite sheet material according to claim 1, **characterised in that** the content of magnesium of the core is between 0.4 and 0.7.

3. Composite sheet material according to one of claims 1 or 2, **characterised in that** the content of manganese of the core is between 0.05 and 0.2.

4. Composite sheet material according to one of claims 1 to 3, **characterised in that** the content of copper of the core is limited to 0.2.

5. Composite sheet material according to one of claims 1 to 4, **characterised in that** the content of magnesium of the cladding sheet is between 0.23 and 0.29.

6. Composite sheet material according to one of claims 1 to 5, **characterised in that** the content of manganese of the cladding sheet is between 0.10 and 0.30.

7. Composite sheet material according to one of claims 1 to 6, **characterised in that** the cladding sheet is applied to the core by co-rolling.

8. Composite sheet material according to one of claims 1 to 7, **characterised in that** a cladding sheet is applied to a single side of the core.

9. Composite sheet material according to one of claims 1 to 7, **characterised in that** a cladding sheet is applied to each one of the two sides of the core.

10. Composite sheet material according to one of claims 1 to 9, **characterised in that** it has a "three-point bending angle" α_{10%} measured according to standard NF EN ISO 7438, at T4P temper, or solution heat treatment, quenched, pre-aged by coiling, typically between 50 and 85°C, and slowly cooled in coil to ambient temperature, by at least 140° after a tensile predeformation of 10%.

11. Composite sheet material according to one of claims 1 to 10, **characterised in that** said "three-point bending angle" α_{10%}, obtained immediately after a tensile predeformation of 10%, by at least 140°, is substantially invariable, or a change typically of less than 5°, with the waiting time at ambient temperature after cooling of the coil, for a waiting time up to at least 6 months.

12. Composite sheet material according to one of claims 1 to 11, **characterised in that** its yield strength Rp_{0.2}, after solution heat treatment, quenched, pre-aged by coiling, typically between 50 and 85°C, and slow cooling in coil to ambient temperature, tensile predeformation of 2%, and baking treatment of the paints for 20 min. at 185°C, is at least 200 MPa and more preferably 220 MPa.

13. Composite sheet material according to one of claims 1 to 12, **characterised in that** it has a "three-point bending angle" α_{10%} measured according to standard NF EN ISO 7438, at T4P temper, or solution heat treatment, quenched, pre-aged by coiling, typically between 50 and 85°C, and slowly cooled in coil to ambient temperature, by at least 140° after a tensile predeformation of 10%, and **in that** its yield strength Rp_{0.2}, after solution heat treatment, quenched, pre-aged by coiling, typically between 50 and 85°C, and slow cooling in coil to ambient temperature, tensile predeformation of 2%, and baking treatment of the paints for 20 min. at 185°C, is at least 200 MPa and more preferably 220 MPa.

14. Motor vehicle body sheet **characterised in that** it is manufactured using composite sheet material according to one of claims 1 to 13.

15. Motor vehicle body sheet according to claim 14, **characterised in that** it is a stamped sheet under a press.

16. Motor vehicle body sheet according to one of claims 14 or 15, **characterised in that** it is a crimped sheet.

17. Method for manufacturing a composite sheet material made of aluminium alloy for motor vehicle body components according to one of claims 1 to 10, wherein a cladding sheet is applied by co-rolling on at least one side of a core, **characterised in that** the compositions of the core and of the cladding sheet, in weight percentages, are such as hereinafter:
| | Si | Fe | Cu | Mn | Mg | Cr | Zn | Ti |
|---|---|---|---|---|---|---|---|---|
| Core | 1.1 - 1.3 | < 0.3 | < 0.3 | 0.05 - 0.3 | 0.4 - 0.8 | < 0.2 | <0.3 | < 0.2 |
| Cladding | 0.45 - 0.65 | < 0.3 | < 0.3 | 0.05 - 0.3 | 0.15 - 0.30 | < 0.2 | < 0.3 | < 0.2 |
other elements < 0.05 each and 0.15 in total, remainder aluminium.
